# EUROPEAN PATENT SPECIFICATION

(11) **EP 1 360 013 B1**
(45) Date of publication and mention of the grant of the patent: **20.08.2008**
(21) Application number: 02718127.0
(22) Date of filing: 12.02.2002
(51) Int. Cl.: E03C 1/266

(54) **GRINDING AND DEWATERING DEVICE FOR ORGANIC WASTE PRODUCTS**
ZERKLEINERUNGS- UND ENTWÄSSERUNGSVORRICHTUNG FÜR ORGANISCHE ABFALLSTOFFE
DISPOSITIF DE MEULAGE ET DE DECANTATION DE DECHETS ORGANIQUES

(30) Priority: 14.02.2001 IT MI20010301
(43) Date of publication of application: 12.11.2003
(73) Proprietor: Ecofast Italia S.r.l. Tecnologie Ambientali, 20122 Milano (IT)
(72) Inventor: TAGLIAFERRI, Costantino, I-23826 Mandello del Lario-Lecco (IT); RUSCONI CLERICI, Piero, I-20121 Milano (IT)
(74) Representative: De Gregori, Antonella
(86) International application number: PCT/EP2002/001505
(87) International publication number: WO 2002/072271

(56) References cited:
- GB-A- 2 234 191
- US-A- 4 337 901
- PATENT ABSTRACTS OF JAPAN vol. 1997, no. 05, 30 May 1997 (1997-05-30) & JP 09 000962 A (FUJIEDA NOBUO), 7 January 1997 (1997-01-07)
- PATENT ABSTRACTS OF JAPAN vol. 2000, no. 17, 5 June 2001 (2001-06-05) & JP 01 022357 A (BROTHER IND LTD), 25 January 1989 (1989-01-25)
- PATENT ABSTRACTS OF JAPAN vol. 1996, no. 01, 31 January 1996 (1996-01-31) & JP 07 242301 A (YASUYUKI NISHI), 19 September 1995 (1995-09-19)

## Description

The present invention relates to a grinding and dewatering device for organic waste products, in particular for domestic use, comprising an autonomous and extractable container for the dewatered material.

The handling of solid urban waste (SUW), which involves numerous problems, is becoming the subject of an increasing amount of research. Collection systems for the various fractions into which waste products are subdivided, have been gradually developed, based on differentiated collection and a selection of the waste products themselves.

In particular, the ever-increasing use of differentiated collection has led to the study of systems and techniques for favouring it and exploiting it as much as possible.

The fraction of solid urban waste which is recognized as being the most complex to handle is that identified as putrescent organic waste (POW) or solid urban waste organic fraction (SUWOF).

Studies in the field, in fact, have demonstrated how the efficiency and costs for the collection and disposal of the various fractions of solid urban waste are strictly correlated to the identification and collection of the putrescent organic fraction. They have also shown how this is correlated to the capillarity of the identification and household distribution of the collecting systems.

With this organization of the collection system, the highest product purity of the material collected is obtained, with a consequential benefit for its subsequent use. In other words, the closer to the source the collection of organic waste is effected, the more beneficial the whole system will be.

For some time now, the known technology has been supplying machines and systems studied specifically for handling the putrescent organic fraction: for example manual collections with small biodegradable bags for the use of the organic fraction of solid urban waste in so-called high-quality composting plants, machines for the subsink grinding (so-called dissipator) of organic residues and sending them to the wastewater-purifier-drainage system, etc.

These latter machines have a varying power and form and their use ranges from domestic and commercial utility, such as in restaurants, bars, etc. to large production centres, such as supermarkets, etc. A grinding and dewatering device is for example described in JP 09 000 962 A.

All of these systems have advantages and disadvantages which are reflected on the general organization costs and on a difficult running of the drainage-purifier system.

To provide further information on the matter, it should be pointed out that there are currently several machines on the market which have tackled the problem of the differentiated collection of the organic fraction of solid urban waste. These machines are defined as dewatering systems or dewaterers as they separate the solids from the liquid part.

A first example consists of devices of the manual type which are simple centrifuges where, in most cases, the organic waste products of the vegetal or semi-liquid type are "squeezed" in order to eliminate most of the water present.

Other more complicated machines first grind the residues and then transfer them to a section of the machine where the grinding water and that present in the material is separated from the solid component of the waste products. These machines are divided into machines for domestic use where the dewatering element (usually a centrifuge) is separated from the grinding element with respect to both the construction and motorization. This creates problems of space, which is always limited, as in the case of kitchen sinks, and of emptying which is manual and consequently neither practical nor hygienic.

Other machines are also used, of the commercial type, designed for large quantities, equipped with dewatering systems which combine a centrifugal and squeezing action of the ground residue. These machines obtain a good product but their dimensions and costs are unfeasible for domestic use. Furthermore, their installation requires 380 Volt power connections, not available in private residences. The emptying of the machine is automatic and is therefore practical and clean as the residue can be sent directly into the container.

The objective of the present invention is to produce a machine which solves the problems associated with the machines currently used in the domestic field, without the necessity of the auxiliary devices of industrial machines.

Another objective is to produce a machine which is particularly simple and not cumbersome, which can be easily installed in the limited space available under sinks.

A further objective is to produce a machine which is particularly easy to handle and clean and which can be easily reached for maintenance purposes.

Yet another objective is to produce a machine which provides a suitable solution to the differentiated collection of the organic fraction of domestic solid urban waste, respecting environmental protection and with a considerable economic saving in the collection itself.

These objectives according to the present invention are achieved by the production of a dissipating and dewatering device for organic waste products as illustrated in claim 1.

Further characteristics of the invention are specified in the subsequent claims.

The characteristics and advantages of a grinding and dewatering device for organic waste products according to the present invention are evident from the following, illustrative but non-limiting description, referring to the schematic drawings enclosed in which:
figure 1 is a schematic elevation view of a first embodiment of a device according to the present invention,
figure 2 is a schematic elevation view of a second form of embodiment of a device according to the present invention,
figure 3 is a schematic elevation view of a third form of embodiment of a device according to the present invention.

With reference to the figures, these illustrate, in general, various embodiments of a grinding and dewatering device for organic waste products.

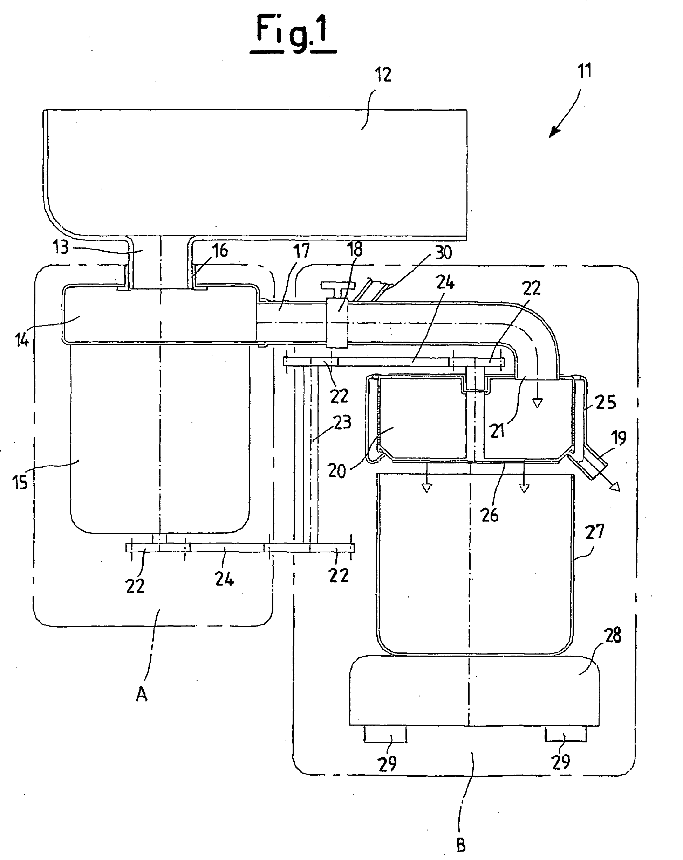

Figure 1 shows a first possible embodiment in which the device, indicated as a whole with 11, is arranged below a sink 12 in correspondence with one of its lower discharge openings 13, in a single unit. The sink illustrated in the example can also be a hopper or similar means for containing the organic waste to be treated.

The device 11 comprises a grinding section A and a dewatering section B. The device consists of a dissipator or grinder 14, directly fitted to a drive shaft (not shown) of a motor 15. Said motor 15, not only activates the grinder 14, but also all the functions of the device. A fastening sleeve 16 with a rapid closure connects the device to the sink in correspondence with the grinder 14.

A collector 17 extends from the lateral and upper part of the dissipator or grinder 14, which carries the ground material to the section situated at the side of the single unit described above. In this example, it can be seen that, on the collector 17, which is bidirectional, there is a by-pass valve 18 which, when the device is switched off, discharges only the water that must pass through the hopper or sink, sending it directly to the drain, by means of a pipe 30. If the device is switched on and operating, the valve 18 directs it towards a dewaterer 20.

Figure 1 also shows how the collector 17 leads to a dewatering and discharge section of the material treated with the grinder 14.

The above collector 17 is, in fact, connected with an opening 21 situated in an upper part of a dewaterer, in the example a centrifuge 20, which is also driven by the motor 15 mentioned above. For this purpose, there is a transmission , consisting, for example, of grooved pulleys 22 and respective supporting shafts 23, connected by means of timing-belts 24.

The movement is activated below the motor 15 and causes the self-cleaning centrifuge 20 to rotate by means of a shaft 23 with two pulleys 22 situated in the intermediate zone between the grinding section and dewatering section. The centrifuge 20 is equipped with watertight protection 25 for collecting the water discharged in the centrifugation phase of the material which is conveniently sent to the drain by means of the pipe 19.

Furthermore, the centrifuge 20, which can be opened from the bottom, is equipped with a lower closing element, schematized in 26, which withholds the material during the centrifugation phase and then lets it drop at the end of the operation. The even temporary removal of the closing element 26 allows the separated and dewatered waste product to fall into an underlying container or collection bag 27.

The container or bag 27 is situated above a weighing unit, such as electronic scales 28, which indicates the weight of the contents, either partially or totally, for a pre-established time, for example a week or month. The weighing unit 28 is also remote-controlled to allow the processed and treated quantities to be read at a distance.

Below said scales 28 of the device, there are anti-vibrating supports with an adjustable height, schematized in 29.

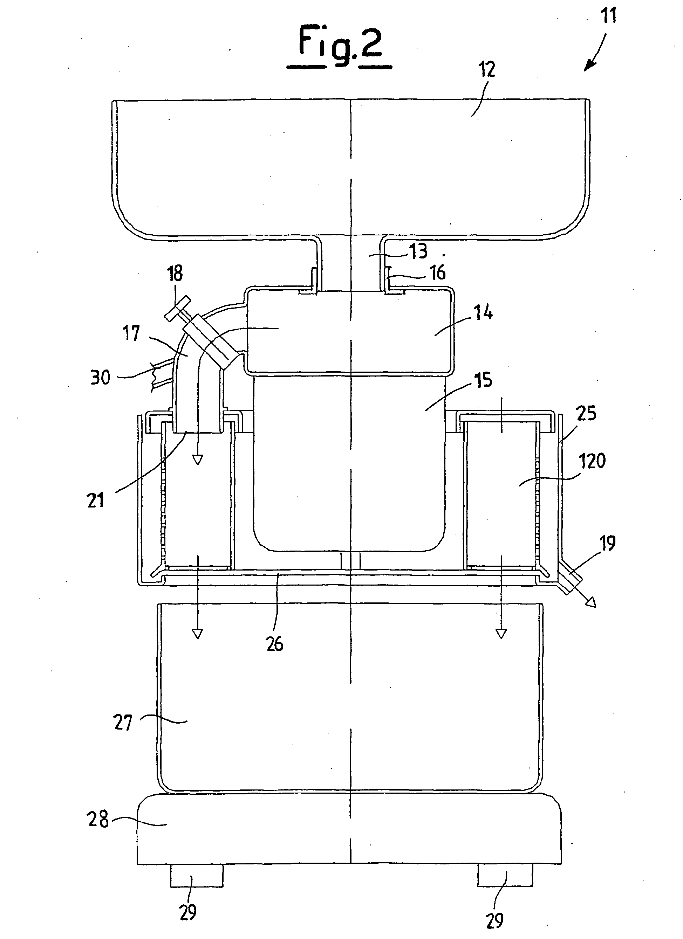

Figure 2 is an alternative of the device of the present invention illustrating an even more compact arrangement. The same reference numbers as the previous example are used for the same elements.

The grinder 14 associated with the relative motor 15 is situated below the sink 12.

The motor 15 extends downwards in a shaft 30 which causes the rotation of a centrifuge 120 in a coaxial position with respect to the motor 15. A collector 17 connects, as in the previous example, the grinder 14 to an opening 21 situated in an upper part of the centrifuge 120.

The water discharged during the centrifugation phase of the material is directly collected by means of the watertight protection 25, and is then sent to the drain by means of the pipe 19.

As in the previous example, the centrifuge 120 withholds the material by means of the lower closing element 26, during the centrifugation phase, and releases it at the end of the operation. The removal of the closing element 26 allows the separated and dewatered waste product to drop into the underlying container or collection bag 27.

The electric/electronic part of the device is situated in insulated tracks which are not accidentally accessible to the user. Access to any part of the mechanical device and/or its electric part is protected by specific switches (not shown) which in the case of intervention, also accidental, block the device and remove the current.

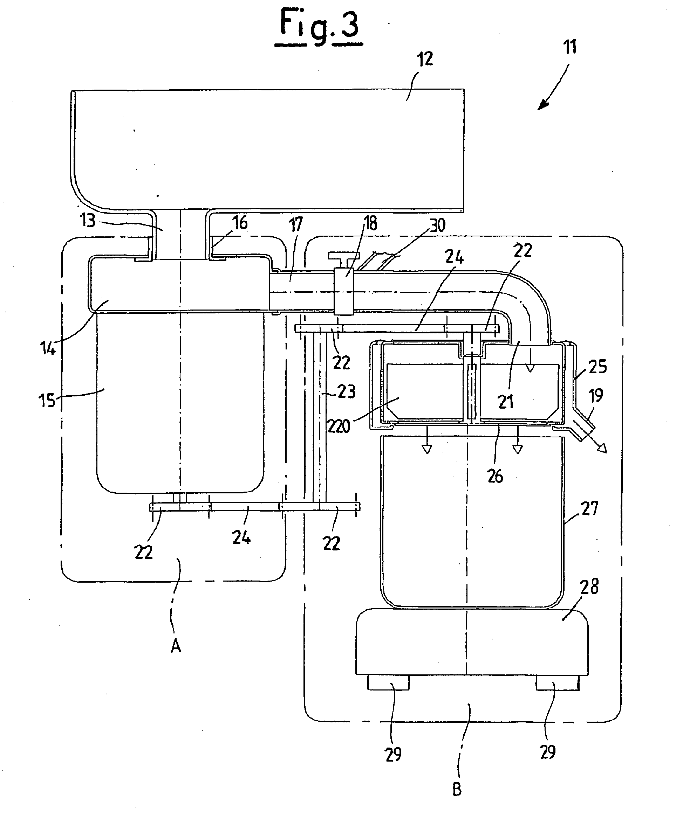

Figure 3 illustrates a third embodiment of the invention, in which, as in the previous examples, the same reference numbers are used for the same elements.

In this third example, more similar to the first, there is a transmission with pulleys 22, supporting shafts 23 and belts 24. This transmission activates a dewaterer consisting of a squeezer with rotating blades 220.

Also in this case there is a watertight protection 25 for collecting the water released. A lower closing element 26 or similar device withholds the material during the squeezing phase and releases it at the end of the treatment. If the closing element 26 is even temporarily removed, the separated and dewatered product obtained falls into the container or collection bag 27, as described above.

In this case there can also be an electronic scale 28 which indicates the weight of the contents, either partially or totally, for a pre-set time.

It can thus be observed how the objectives according to the present invention are achieved in a simple and rapid way.

This device also fully satisfies the demands and requisites required as it provides the possibility, for domestic use, of collecting, selecting, reducing volumetrically and weight-wise, and weighing the organic residues produced during normal family activities.

This type of device which resembles a small household appliance, should be considered as being a valid instrument for the differentiated collection of the organic fraction of solid urban waste in compliance with the indications of environmental and ecological policies. This device, in fact, operates in accordance with recommendations established by the law and is in line with the spirit of modern waste handling.

It should be observed in fact that this device collects the residues of kitchen activities as soon as they are generated. This ensures product purity and lowers the running costs of differentiated collection.

The grinding section consists for example of a grinder which acts on the material by means of cutting and abrasion, exploiting the combined action of the centrifugal force supplied by a rotating plate which brings the residues in contact with a fixed ring-shaped blade.

Furthermore, this action , which is more similar to abrasion, is combined with a thrust provided by pushing elements situated on the rotating disk and fixed so as to have free movement only in the radial direction by means of thrust loads. There is also a selection of the waste material at the entry, due to the fact that the device has an opening limited by the inlet hole whose dimensions are the same as the floor drains of a common sink.

The device then grinds the residues and dewaters them in an appropriate section automatically discharging them according to pre-established sequences into an underlying container.

The residues broken up in the grinding section and then dewatered in the drying section are discharged, in the form of particulate, into a specific container with a very high volumetric density.

The appearance and characteristics of the organic residues discharged from the device, as also the type of containers, are of considerable importance in the subsequent destiny of the waste products.

The device, object of the invention, can be proposed as a producer of secondary raw material to be used either as a matrix for high-quality compost, due to its product purity, its extremely reduced salinity generated by grinding in the presence of water, and its controlled humidity degree which is very useful in biological fermentation processes of biomasses, and also, if so decided by the public administrator, as fuel for thermo-exploitation plants, where the reduced presence of water is extremely important for the thermodynamic efficiency of plants and also contributes to the running of the process itself (maintaining the temperature in the ovens - energy balance of the plants).

Furthermore, with a device according to the invention, there is a reduced volume and putrescence of the waste products, allowing economic and ecological savings. There is in fact a reduced discharge of gases with respect to the collection vehicles due to their smaller dimensions, the fact that they are no longer equipped with compactors and also because of the less frequent collections required.

Finally, the possibility of weighing the waste material produced enables the device to be perfectly integrated as a differentiated collection instrument of solid urban waste at the service of the responsible municipality. The availability of an accessory such as scales should provide a valid contribution in identifying consumption for the payment of urban waste collection and disposal services. This should in fact enable the user of the service to pay in relation to what is effectively produced.

In short, the device associates aspects which are more specifically ecological and environmental with aspects relating to encumbrance and positioning, to satisfy the demands of the users. The device in fact has the minimum possible encumbrance, great simplicity of both construction and use, accessible cleaning, easy maintenance and a high degree of safety.

This is made possible by a minimum encumbrance, linked to the advantage of the possibility of being positioned under the kitchen sink. The solution proposed also provides for a single motor which generates the movement of the components and for the dewatered residues to be discharged below the self-cleaning dewaterer, of whatever type it may be.

The facility of use of the device derives from the fact that the waste product is sent by a stream of water to the grinding section which then transfers the ground material to the dewaterer, which, as it is self-cleaning, drops the dry residue onto the moveable bottom of the basin. At the end of the cycle, the moveable bottom, for example divided into sections, subsequently opens as a result of the intervention of a programmed activator and the residue falls into the underlying container. When the container weighed by the machine emits the signal "full", and only in this case, access is allowed to the container through a specific opening, enabling it to be removed and replaced with a new one.

The device can also be easily cleaned, mainly in the dewatering section; this in fact is where food residues may remain creating bacterial flora and unpleasant odours over a period of time.

It is therefore important for the device to consist of parts which can be dismantled and removed, made of materials (plastics or stainless steel) which do not change over certain periods of time, which do not generate unpleasant odours and which can all be easily and rapidly assembled. The various sections of the device must allow easy inspection and cleaning.

Finally, of no lesser importance is the safety of the device which can be increased by the division into two sections as mentioned above, a grinding section A and a dewatering section B. In the embodiments in which the two sections are in some way separated, an entirely careened single unit can be used, which can in no way be dismantled by the domestic user, thus guaranteeing maximum safety.

The motion activation on the part of a single motor simplifies the movement. A switch, not shown, ensures interruption of the electric current, and any possible electric or accidental discharges generated by the apparatus, in the case of the opening of some part of the device. In this respect, the switch which activates the device, is situated externally making it easy to reach and is highly insulated.

Numerous modifications and variations, all included in the scope of the invention, can be applied to the grinding and dewatering device for organic waste products thus conceived; furthermore all the details can be substituted with technically equivalent elements. In practice, the devices used, as also the dimensions, can vary according to the technical requirements.

## Claims

1. A grinding and dewatering device for organic waste products which can be fed through a hopper (12), in particular for domestic use, comprising a grinder (14) and a water separator, also including means for removing the separated and dewatered waste product and driving motor devices, whereby said grinder (14) and said dewaterer (20, 120, 220) are driven in rotation by a single motor (15) and said dewaterer (20, 120, 220), which can be opened on the bottom, comprises an underlying collecting container (27) for said separated and dewatered waste product.

2. The device according to claim 1, **characterized in that** said grinder (14) and said dewaterer (20, 120, 220) are coaxial to each other and are driven by said motor (15).

3. The device according to claim 1, **characterized in that** said grinder (14) and said dewaterer (20, 120, 220) are connected by means of a transmission (22, 23, 24) and driven by said single motor (15).

4. The device according to any of the previous claims 1-3, **characterized in that** said dewaterer consists of a centrifuge (20, 120).

5. The device according to any of the previous claims 1-3, **characterized in that** said dewaterer consists of a squeezer with rotating blades (220).

6. The device according to claim 1, **characterized in that** below said collection container (27) there is an electronic weighing unit (28) which indicates the weight of the contents.

7. The device according to claim 6, **characterized in that** said weighing unit (28) both partially and totally indicates the weight for a pre-established time.

8. The device according to claim 6, **characterized in that** said weighing unit (28) has a remote-controlled connection.

9. The device according to claim 1, **characterized in that** between said grinder (14) and said dewaterer (20, 120, 220), there is a collector (17) equipped with a by-pass valve (18) which selectively connects said grinder (14) to said dewaterer (20, 120, 220) and to a pipe (30) connected to a discharge drain.

10. The device according to any of the previous claims, **characterized in that** said hopper (12) is a sink.

## Patentansprüche

1. Zerkleinerungs- und Entwässerungsvorrichtung für organische Abfallprodukte, welche durch einen Zufuhrbehälter (12) zugeführt werden können, insbesondere für den häuslichen Gebrauch, umfassend einen Zerkleinerer (14) und einen Wasserabscheider, auch umfassend Mittel zur Entfernung des abgetrennten und entwässerten Abfallprodukts und Antriebsmotorvorrichtungen, wobei der Zerkleinerer (14) und der Entwässerer (20, 120, 220) nacheinander durch einen einzigen Motor (15) angetrieben werden und wobei der Entwässerer (20, 120, 220), welcher an dem Boden geöffnet werden kann, einen darunter liegenden Sammelbehälter (27) für das abgetrennte und entwässerte Abfallprodukt umfasst.

2. Vorrichtung nach Anspruch 1, **dadurch gekennzeichnet, dass** der Zerkleinerer (14) und der Entwässerer (20, 120, 220) koaxial zueinander angeordnet sind und durch den Motor (15) angetrieben werden.

3. Vorrichtung nach Anspruch 1, **dadurch gekennzeichnet, dass** der Zerkleinerer (14) und der Entwässerer (20, 120, 220) mittels eines Getriebes (22, 23, 24) verbunden sind und durch den einzigen Motor (15) angetrieben werden.

4. Vorrichtung nach einem der vorhergehenden Ansprüche 1-3, **dadurch gekennzeichnet, dass** der Entwässerer aus einer Zentrifuge (20, 120) besteht.

5. Vorrichtung nach einem der vorhergehenden Ansprüche 1-3, **dadurch gekennzeichnet, dass** der Entwässerer aus einer Presse mit sich drehenden Blättern (220) besteht.

6. Vorrichtung nach Anspruch 1, **dadurch gekennzeichnet, dass** sich unterhalb des Sammelbehälters (27) eine elektronische Wiegeeinheit (28) befindet, welche das Gewicht des Inhalts anzeigt.

7. Vorrichtung nach Anspruch 6, **dadurch gekennzeichnet, dass** die Wiegeeinheit (28) das Gewicht für eine vorbestimmte Zeitspanne sowohl anteilig als auch vollständig anzeigt.

8. Vorrichtung nach Anspruch 6, **dadurch gekennzeichnet, dass** die Wiegeeinheit (28) eine ferngesteuerte Verbindung aufweist.

9. Vorrichtung nach Anspruch 1, **dadurch gekennzeichnet, dass** sich zwischen dem Zerkleinerer (14) und dem Entwässerer (20, 120, 220) ein Sammler (17) befindet, welcher mit einem Umgehungsventil (18) ausgestattet ist, welches den Zerkleinerer selektiv mit dem Entwässerer (20, 120, 220) und einem Rohr (30), welches mit einem Ablass verbunden ist, verbindet.

10. Vorrichtung nach einem der vorhergehenden Ansprüche, **dadurch gekennzeichnet, dass** der Zufuhrbehälter (12) ein Ausguss ist.

## Revendications

1. Dispositif de broyage et de décantation de déchets organiques pouvant être amenés à travers une trémie (12), en particulier à usage domestique, comprenant un broyeur (14) et un séparateur d'eau, comprenant également des moyens permettant de retirer les déchets séparés et décantés et des dispositifs à moteur d'entraînement, ledit broyeur (14) et ledit dispositif de décantation (20, 120, 220) étant entrainés en rotation par un moteur unique (15) et ledit dispositif de décantation (20, 120, 220), qui peut être ouvert sur la partie inférieure, comprend un récipient collecteur (27) sous-jacent pour lesdits déchets séparés et décantés.

2. Dispositif selon la revendication 1, **caractérisé en ce que** ledit broyeur (14) et ledit dispositif de décantation (20, 120, 220) sont coaxiaux l'un à l'autre et sont entraînés par ledit moteur (15).

3. Dispositif selon la revendication 1, **caractérisé en ce que** ledit broyeur (14) et ledit dispositif de décantation (20, 120, 220) sont reliés au moyen d'une transmission (22, 23, 24) et entraînés par ledit moteur unique (15).

4. Dispositif selon l'une quelconque des revendications précédentes 1 à 3, **caractérisé en ce que** ledit dispositif de décantation consiste en une centrifugeuse (20, 120).

5. Dispositif selon l'une quelconque des revendications précédentes 1 à 3, **caractérisé en ce que** ledit dispositif de décantation consiste en une presse à lames rotatives (220).

6. Dispositif selon la revendication 1, **caractérisé en ce que** sous ledit récipient collecteur (27), il y a une unité de pesage électronique (28) qui indique le poids du contenu.

7. Dispositif selon la revendication 6, **caractérisé en ce que** ladite unité de pesage (28) indique à la fois partiellement et complètement le poids pendant une durée prédéfinie.

8. Dispositif selon la revendication 6, **caractérisé en ce que** ladite unité de pesage (28) est télécommandée.

9. Dispositif selon la revendication 1, **caractérisé en ce qu'**entre ledit broyeur (14) et ledit dispositif de décantation (20, 120, 220), il y a un collecteur (17) équipé d'une vanne de dérivation (18) qui relie de manière sélective ledit broyeur (14) au dit dispositif de décantation (20, 120, 220) et à un tuyau (30) relié à un drain de vidange.

10. Dispositif selon l'une quelconque des revendications précédentes, **caractérisé en ce que** ladite trémie (12) est un évier.
